# EUROPÄISCHE PATENTANMELDUNG

(11) **EP 1 865 215 A1**
(43) Veröffentlichungstag der Anmeldung: **12.12.2007**
(21) Anmeldenummer: 06011810.6
(22) Anmeldetag: 08.06.2006
(51) Int. Cl.: F16D 1/095

(54) **Spannvorrichtungs-Set**

(71) Anmelder: Gerwah GmbH, 63868 Grosswallstadt (DE)
(72) Erfinder: Schüssler, Gerd, 63868 Grosswallstadt (DE)
(74) Vertreter: Köster, Hajo

(57) **Zusammenfassung**

Bereitgestellt wird ein Spannvorrichtungs-Set zum Verbinden einer Hohlwelle (3) mit einer koaxial darin verlaufenden Vollwelle (4) aus einer zylindrischen Adapterbuchse (1), die in ein Ende (6) der Hohlwelle (3) eingesetzt werden kann, und einer Schrumpfscheibe (2), welche außen auf die Hohlwelle (3) aufgesetzt und die Hohlwelle (3) zusammen mit der Adapterbuchse (1) nach radial innen verpressen kann. Dieser Set ist dadurch gekennzeichnet, dass die Adapterbuchse (1) aus Stahl gefertigt ist und mindestens auf Ihrer Außenmantelfläche und Innenmantelfläche mit einer reiberhöhenden, insbesondere einen Hartstoff enthaltenden Beschichtung (17) versehen ist.

Mit diesem Set ist es möglich, Vollwellen unterschiedlichen Nenndurchmessers zuverlässig und auf einfache Weise mit einer Hohlwelle zu verspannen.

## Beschreibung

Die Erfindung betrifft einen Spannvorrichtungs-Set zum Verbinden einer Hohlwelle mit einer koaxial darin verlaufenden Vollwelle aus einer zylindrischen Adapterbuchse, die in ein Ende der Hohlwelle eingesetzt werden kann, und einer Schrumpfscheibe, welche außen auf die Hohlwelle aufgesetzt und die Hohlwelle zusammen mit der Adapterbuchse nach radial innen verpressen kann.

Aus der DE 42 30 941 A1 ist eine Spannvorrichtung für die Verbindung einer Hohlwelle mit einer Vollwelle bekannt. Um die Vollwelle spielfrei in die Hohlwelle einpassen zu können, werden zwei Konusringe zwischen die Hohlwelle und die Vollwelle eingesetzt und gegeneinander von radial außen verpresst.

Diese bekannte Spannvorrichtung hat unter anderem die Nachteile, dass einerseits die Anzahl der Teile hoch ist und das Fertigen von zwei einen Konus aufweisenden Teilen kostspielig ist.

Zur Vermeidung dieser und weiterer Nachteile empfiehlt die DE 100 60 037 A1, bei einer Spannvorrichtung der hier in Rede stehenden Art die Hohlwelle an zumindest einem ihrer Enden mit einem Innenkonus zur Aufnahme einer Adapterbuchse vorzusehen, welche einen entsprechenden Außenkonus aufweist und auf der Vollwelle liegt.

Zum Verspannen dient ein Spannsatz mit einem radial innen liegenden Stauchring, dessen Außenmantelfläche zwei gegenläufige Konusflächen aufweist, und mit zwei Druckringen, deren Innenmantelfläche eine Konusfläche aufweist, die mit der gegenüberliegenden Konusfläche des Stauchringes zusammenwirkt, so dass beim axialen Verspannen der Stauchring zusammengedrückt wird und die Hohlwelle mittels der zwei Konusringe mit der Vollwelle radial verspannt.

Mit dieser bekannten Spannvorrichtung soll die zu spannende Hohlwelle auch auf grob tolerierten und/oder im Nenndurchmesser unterschiedlichen Vollwellen zuverlässig radial verspannbar sein.

Ein Nachteil an dieser Spannvorrichtung ist der Umstand, dass die Hohlwelle, die üblicherweise kundenseitig bzw. von einem Dritten gestellt wird beziehungsweise vorgegeben wird, mit einem Innenkonus ausgestattet werden muss, der mit dem Außenkonus der Adapterbuchse zusammenwirkt. Die beiden Teile müssen somit aufeinander abgestimmt werden. Dies verhindert eine universelle Anwendbarkeit der bekannten Spannvorrichtung.

Aufgabe der vorliegenden Erfindung ist es, einen Spannvorrichtungs-Set zur Verfügung zu stellen, mit dem Vollwellen unterschiedlichen Nenndurchmessers zuverlässig und auf einfache Weise mit einer Hohlwelle verspannbar sind.

Gelöst wird diese Aufgabe durch ein Spannvorrichtungs-Set gemäß der Lehre des Anspruchs 1.

Die im erfindungsgemäßen Spannvorrichtungs-Set eingesetzte Adapterbuchse ist aus Stahl gefertigt und auf ihrer Außenmantelfläche- und Innenmantelfläche bzw. auf ihrer Außenoberfläche und Innenoberfläche mit einer reiberhöhenden Beschichtung versehen.

Die Adapterbuchse ist zylindrisch ausgestaltet. Mit anderen Worten, sowohl ihre Außenmantelfläche als auch ihre Innenmantelfläche ist zylindrisch.

Die Adapterbuchse wird auf die Vollwelle aufgeschoben und in ein Ende der üblicherweise von einem Dritten zur Verfügung gestellten Hohlwelle eingesetzt; sie liegt somit zwischen der Vollwelle und der Hohlwelle und füllt den Zwischenraum mehr oder weniger aus. Es ist somit nicht erforderlich, am Ende der Hohlwelle einen Innenkonus vorzusehen, wie das bei der Spannvorrichtung gemäß der DE 100 60 037 A1 der Fall ist. Auch lässt sich eine zylindrische Buchse leichter fertigen als eine einen Außenkonus besitzende Adapterbuchse gemäß der genannten Druckschrift.

Bedingt dadurch, dass die erfindungsgemäß eingesetzte Adapterbuchse eine reiberhöhende Beschichtung aufweist, ist es möglich, mit nur einer Adapterbuchse größere Unterschiede zwischen dem Außendurchmesser der Vollwelle und dem Innendurchmesser der Hohlwelle auszugleichen. Die von der Schrumpfscheibe ausgeübte radiale Spannkraft führt dazu, dass die Hohlwelle spielfrei mit der Vollwelle verbunden wird.

Reiberhöhende Beschichtungen der hier in Rede stehenden Art sind im Übrigen bekannt. Eine derartige Beschichtung oder Schicht führt zu einer Reibwerterhöhung oder Reibungserhöhung der damit versehenen Bauteile.

Nach einer bevorzugten Ausführungsform weist eine derartige Beschichtung mindestens einen Hartstoff auf. Bei dem Hartstoff kann es sich beispielsweise um Korunde, Diamantpulver, Keramikpulver oder Stahlpartikel handeln. Bevorzugt wird erfindungsgemäß SiC (Siliciumcarbid) eingesetzt.

Beim radialen Zusammenpressen der Hohlwelle mit der außen und innen beschichteten Adapterbuchse und der Vollwelle kommt es auf der inneren und äußeren Mantelfläche der Adapterbuchse zu einem Eingreifen der Hartstoffe bzw. der genannten Partikel in die der Adapterbuchse gegenüberliegende Vollwelle und Hohlwelle und damit zu einer erhöhten Kraftübertragung bei dieser kraftschlüssigen Verbindung.

Die Hartstoffe bzw. Partikel werden zweckmäßigerweise durch vernickeln, beispielsweise chemisches vernickeln, oder durch bekannte Auftragsverfahren, beispielsweise durch Auftragen von mit diesen Hartstoffen versetzten Lacken oder Lösungsmitteln, auf die Adapterbuchse aufgebracht.

Die erfindungsgemäße Adapterbuchse ist zumindest an ihrer Innenmantelfläche und an ihrer Außenmantelfläche mit der reiberhöhenden Beschichtung versehen. Vorzugsweise ist sie vollständig mit dieser Beschichtung versehen.

Die reiberhöhende Beschichtung wird vorzugsweise durch chemische Vernickelung mit eingelagertem SiC beziehungsweise eingelagerten SiC-Partikeln erhalten. Derartige Beschichtungen und das Aufbringen auf mechanische Bauteile sind dem Fachmann bekannt, so dass sich eine weitere Erörterung erübrigt. Die Schichtdicke der Beschichtung beträgt vorzugsweise 0,005 bis 0,01 und insbesondere bevorzugt 0,007 bis 0,009 mm. Der genannte Bereich von 0,005 bis 0,001 mm umfasst alle in diesem Bereich eingeschlossenen Werte, beispielsweise 0,0055, 0,006, 0,0065, 0,007, 0,0075, 0,008, 0,0085, 0,009, 0,0095 und 0,0010. Auch alle Zwischenbereiche zwischen diesen beispielsweise aufgeführten Einzelwerten sind umfasst.

Nach einer weiterhin bevorzugten Ausführungsform besitzt die Adapterbuchse einen sich axial erstreckenden, durchgehenden Längsschlitz. Dadurch wird der Einsatzbereich der erfindungsgemäßen Adapterbuchse noch weiter vergrößert. Mit anderen Worten, es können größere Unterschiede in den Nennwertdurchmessern überbrückt und ausgeglichen werden, da die Adapterbuchse weiter zusammengedrückt werden kann.

In das andere Ende der Hohlwelle ist vorzugsweise eine zylindrische Stützbuchse eingesetzt, die aus Stahl oder auch aus einem anderen Metall, beispielsweise Aluminium gefertigt sein kann. Diese Stützbuchse dient dazu, die Vollwelle koaxial zur Hohlwelle zu lagern.

Bei dieser Stützbuchse handelt es sich vorzugsweise um eine Klemmbuchse.

Die erfindungsgemäße Adapterbuchse wird zusammen mit einer Schrumpfscheibe in dem erfindungsgemäßen Spannvorrichtungs-Set zum Einsatz gebracht. Derartige Schrumpfscheiben, die auch als Spannsatz bezeichnet werden können, dienen zum kraft- beziehungsweise reibschlüssigen Verbindungen und besitzen einen radial innen liegenden Stauchring, dessen Außenmantelfläche mindestens eine Konusfläche aufweist. Ferner ist mindestens ein Druckring vorhanden, dessen Innenmantelfläche eine Konusfläche aufweist, die mit der Konusfläche des Stauchringes zusammenwirkt, so dass beim axialen Verspannen der Stauchring zusammengedrückt wird. Prinzipiell kann jeder derartige bekannte Spannsatz bzw. jede derartige bekannte Schrumpfscheibe eingesetzt werden, sofern er bzw. sie in der Lage sind, die Hohlwelle radial nach innen zusammenzudrücken und diese Hohlwelle mit der Adapterbuchse und der Vollwelle radial zu verspannen und somit einen Kraft- und Reibschluss zu bewirken.

Vorzugsweise wird bei dem erfindungsgemäßen Spannvorrichtungs-Set ein geschmiedeter Spannsatz gemäß der Lehre des deutschen Gebrauchsmusters Nr. 20 2004 018 828.7 eingesetzt. Ein derartiger Spannsatz verfügt über eine erhöhte Festigkeit, so dass mit ihm höhere radiale Verspannkräfte ausgeübt werden können.

Wenn im Rahme der vorliegenden Unterlagen von einer Vollwelle die Rede ist, welche innerhalb der Hohlwelle angeordnet ist und koaxial dazu verläuft, dann umfasst dieser Ausdruck "Vollwelle" auch solche Ausführungsformen, bei denen diese "innere" Welle ebenfalls eine Hohlwelle darstellt. Der einfacheren Darstellbarkeit halber werden diese Wellen hier jedoch als Vollwelle bezeichnet.

Sowohl die Hohlwelle als auch die Vollwelle stellen üblicherweise Bestandteile einer Vorrichtung dar, die beispielsweise von einer Drittfirma bereitgestellt werden. Der erfindungsgemäße Spannvorrichtungs-Set dient dann zum kraftschlüssigen Verbinden der Vollwelle mit der Hohlwelle. Bei der Vollwelle kann es sich beispielsweise um eine Antriebswelle handeln, während die Hohlwelle beispielsweise mit einem Elektromotor und einem Getriebe verbunden ist.

Die Erfindung wird anhand der beiliegenden Zeichnungen näher erläutert. Dabei zeigen:
- Fig. 1: eine Längsschnittansicht eines erfindungsgemäßen Spannvorrichtungs-Set mit einer auf einer Hohlwelle aufgesetzten Schrumpfscheibe und einer Adapterbuchse, welche in ein Ende der Hohlwelle eingesetzt ist und auf die damit zu verbindenden Vollwelle aufgeschoben ist,
- Fig. 2: eine perspektivische Ansicht einer erfindungsgemäßen Adapterbuchse,
- Fig. 3: eine Aufsicht auf die in der Fig. 2 gezeigte Adapterbuchse von links,
- Fig. 4: eine Schnittansicht der in den Figuren 2 und 3 gezeigten Adapterbuchse entlang der Linie A - A der Fig. 3,
- Fig. 5: eine perspektivische Ansicht einer Stützbuchse in Form einer Klemmbuchse,
- Fig. 6: eine Seitenansicht der in der Fig. 5 gezeigten Stützbuchse,
- Fig. 7: einen Schnitt entlang der Linie AA gemäß Fig. 6,
- Fig. 8: eine Aufsicht auf die in der Fig. 7 gezeigte Klemmbuchse von rechts, und
- Fig. 9: die Einzelheit NB gemäß Fig. 8

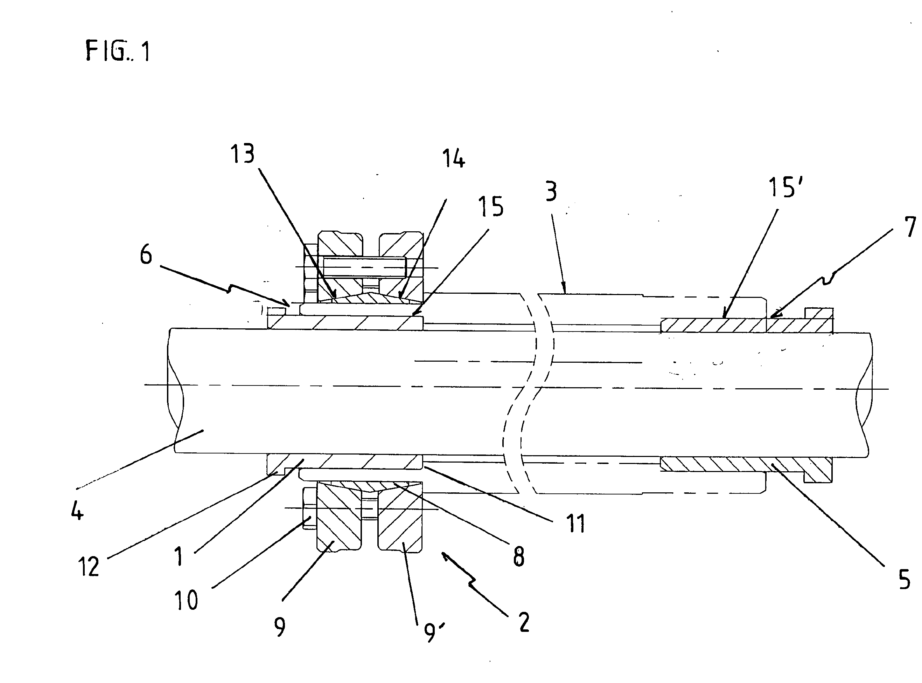

Fig. 1 erläutert den Einsatz eines erfindungsgemäßen Spannvorrichtungs-Set zum kraftschlüssigen Verbinden einer Hohlwelle 3 mit einer in dieser Hohlwelle 3 verlaufenden sowie koaxial dazu angeordneten Vollwelle 4. Die Hohlwelle 3 kann mit einem Getriebe und/oder einem Elektromotor (nicht gezeigt) verbunden sein, während die Vollwelle 4 als Antriebswelle fungiert. Die damit angetriebene Vorrichtung ist ebenfalls nicht gezeigt.

Die zum erfindungsgemäßen Spannvorrichtungs-Set gehörige Schrumpfscheibe 2 wird an einem Ende 6 außen auf die Hohlwelle 3 aufgesetzt beziehungsweise aufgeschoben. Zwischen die Hohlwelle und die Vollwelle 4 wird an diesem Ende 6 die Adapterbuchse 1 auf die Vollwelle 4 aufgeschoben und in den Zwischenraum 15 zwischen Hohlwelle 3 und Vollwelle 4 eingeschoben.

Der Innendurchmesser der Hohlwelle 3 ist im Bereich der Schrumpfscheibe 2 größer als im weiter innen liegenden Bereich der Hohlwelle 3, so dass die Innenmantelfläche der Hohlwelle 3 einen Absatz 11 aufweist. Dies ist jedoch nicht zwingend erforderlich. Vielmehr kann der Innendurchmesser der Hohlwelle über die gesamte Länge gleich sein.

Die Adapterbuchse 1 wird so weit in die Hohlwelle 3 eingeschoben, bis ihre eine Stirnseite (rechts in Fig. 1) gegen den genannten Absatz 11 in Anschlag kommt.

Am anderen Ende weist die Adapterbuchse 1 einen radial außen vorspringenden Ringflansch 12 auf.

Außen um die Hohlwelle 3 läuft im Bereich des ersten Endes 6 die Schrumpfscheibe 2 bzw. der Spannsatz 2 um die Hohlwelle 3 herum. Die Schrumpfscheibe 2 besitzt einen Stauchring 8, der an seiner Außenmantelfläche eine geneigte Konusfläche 13 und eine gegenläufig geneigte Konusfläche 14 besitzt. Die Innenmantelfläche des Stauchringes 8 ist zylindrisch ausgestaltet. Zweckmäßigerweise besitzt der Stauchring 8 auch einen sich in Axialrichtung erstreckenden Schlitz (nicht gezeigt).

Die radial außen vom Stauchring 8 angeordneten Druckringe 9, 9' sind an ihren Innenmantelflächen ebenfalls konisch ausgebildet, wobei die Konusfläche des Druckringes 9 gegenläufig zur Konusfläche des Druckringes 9' geneigt ist.

Zum Verspannen der Schrumpfscheibe 2 dienen mehrere, auf einem Kreisumfang gleichmäßig verteilt angeordnete Spannschrauben 10, die sich von einer Seite durch eine Bohrung in dem Druckring 9 hindurch bis in eine Gewindebohrung im Druckring 9' erstrecken. Bei diesen Spannschrauben 10 handelt es sich dabei um Gewindeschrauben. Beim Anziehen dieser Spannschrauben 10 werden die Druckringe 9, 9' in Axialrichtung aufeinander zu bewegt beziehungsweise zusammengezogen. Dabei gleiten die Druckringe 9, 9' mit ihren Konusflächen 13, 14 auf der damit zusammenwirkenden Konusfläche des Stauchringes 8 auf und übertragen dabei nach radial innen gerichtete Kräfte von dem Stauchring 8 auf das Ende 6 der Hohlwelle und die Adapterbuchse 1 sowie die Vollwelle 4 und verspannen diese Teile unter Herstellung des gewünschten Kraft- beziehungsweise Reibschlusses.

Die Druckringe 9, 9' sind durch Schmieden in einem Gesenk hergestellt worden.

Eine derartige Schrumpfscheibe sowie derartige Druckringe sind im deutschen Gebrauchsmuster 20 2004 018 828.7 näher beschrieben, Auf die Offenbarung dieser Gebrauchsmusterschrift wird hiermit ausdrücklich Bezug genommen.

Am anderen Ende 7 der Hohlwelle 3 befindet sich die Stützbuchse 5, die ebenfalls auf die Vollwelle 4 aufgeschoben und in den Zwischenraum 15' zwischen der Außenmantelfläche der Vollwelle 4 und der Innenmantelfläche der Hohlwelle 3 eingeschoben ist. Der Innendurchmesser der Hohlwelle 3 ist im Bereich dieses Zwischenraums 15' größer als in dem weiter innen liegenden Abschnitt.

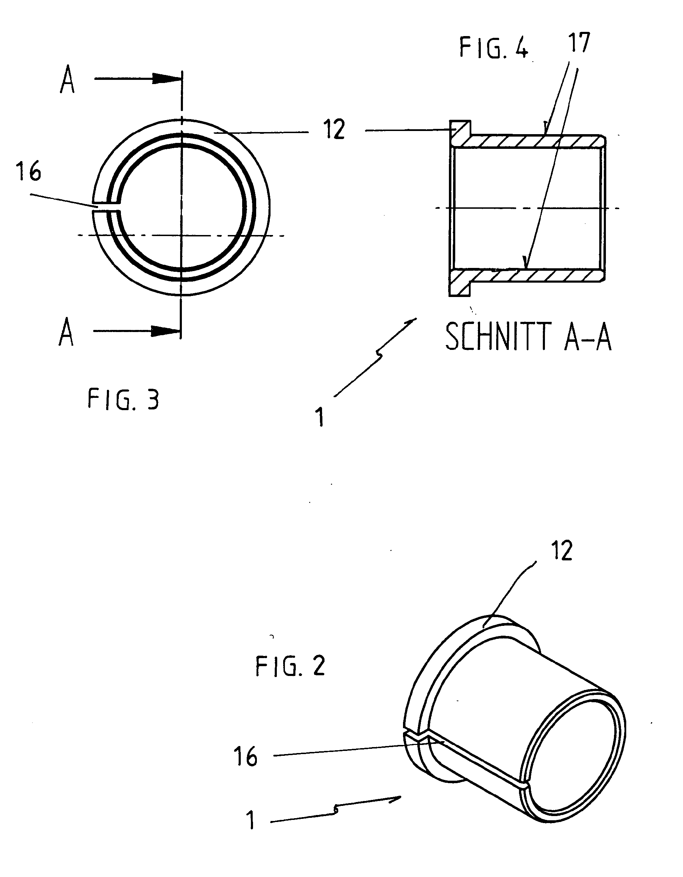

Die Adapterbuchse 1 ist in den Figuren 2 bis 4 näher gezeigt. Diese Adapterbuchse 1 ist aus Stahl gefertigt und ist zylindrisch ausgestaltet. Mit anderen Worten, sowohl die Außenmantelfläche als auch die Innenmantelfläche dieser Adapterbuchse 1 verläuft zylindrisch beziehungsweise parallel sowie beabstandet von der Längsachse.

An einem Ende besitzt die Adapterbuchse 1 einen sich nach radial außen erstreckenden, umlaufenden Ringflansch 12. Die Adapterbuchse 1 ist zudem in Längsrichtung beziehungsweise in Axialrichtung mit einem durchgehenden Schlitz 16 versehen.

Zumindest die Außenmantelfläche als auch die Innenmantelfläche der Adapterbuchse 1 sind mit einer Beschichtung 17 ausgestattet, die durch chemische Vernickelung erhalten wurde. Diese Beschichtung weist zudem eingelagerte Partikel beziehungsweise Hartstoffe aus SiC (Siliciumcarbid) auf. Diese Beschichtung 17 findet sich vorzugsweise auf der gesamten Oberfläche der Adapterbuchse 1.

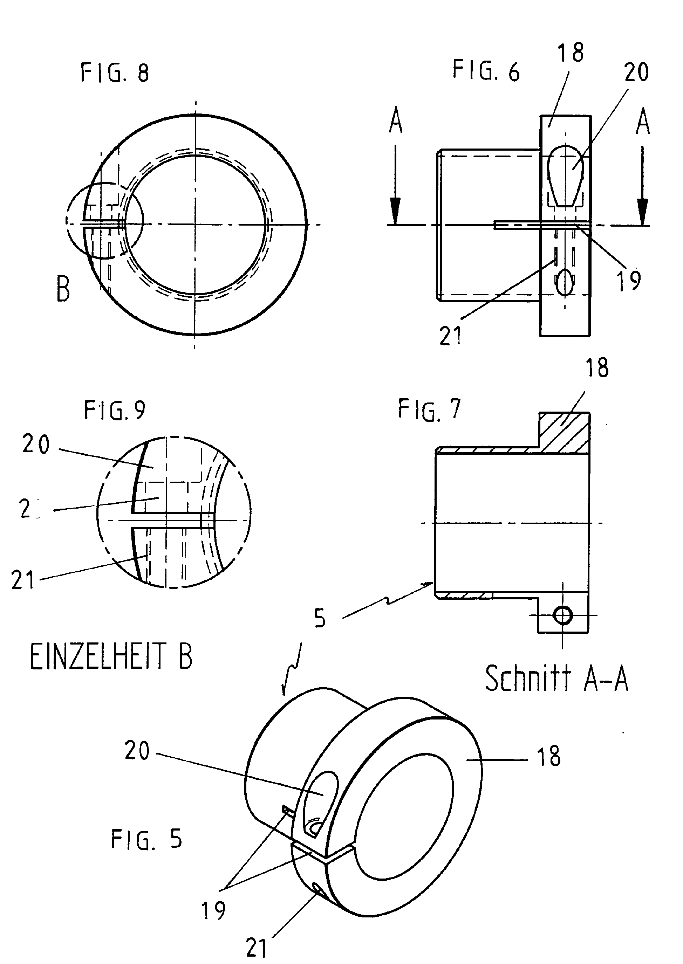

Die in das andere Ende der Hohlwelle 3 eingesetzte Stützbuchse 5 ist in den Figuren 5 bis 9 näher dargestellt. Diese Stützbuchse 5 besitzt an ihrem axial äußeren Rand einen sich nach radial außen erstreckenden, umlaufenden Ringflansch 18. Die Stützbuchse 5 besitzt einen Schlitz 19, der sich von demjenigen Ende, an dem sich der Ringflansch 19 befindet, durch diesen Ringflansch und auch teilweise durch die restliche Buchse bis ca. zur Mitte in Längsrichtung erstreckt.

Auf einer Seite des Schlitzes 19 der Stützbuchse 5 ist im Ringflansch 18 eine Ausnehmung 20 vorgesehen, von der sich eine Bohrung 22 tangential zur Längsachse der Stützbuchse 5 in Richtung auf die andere Seite von dem Schlitz 19 erstreckt und dort in eine Gewindebohrung 21 übergeht. In diese Bohrung kann eine Gewindeschraube eingesetzt werden, die in die Gewindebohrung 21 eingreift und beim Anziehen die beiden durch den Schlitz 19 getrennten Abschnitte des Ringflansches 18 zusammenzieht und damit die Stützbuchse 5 auf der Vollwelle 3 festklemmt. Mit anderen Worten, die Stützbuchse 5 stellt eine Klemmbuchse dar.

Die Stützbuchse 5 kann aus jedem geeigneten Material, beispielsweise Stahl oder Aluminium gefertigt sein.

### Bezugszeichenliste

- 1: Adapterbuchse
- 2: Schrumpfscheibe beziehungsweise Spannsatz
- 3: Hohlwelle
- 4: Vollwelle
- 5: Stützbuchse
- 6: erstes Ende der Hohlwelle 3
- 7: zweites Ende der Hohlwelle 3
- 8: Stauchring
- 9, 9': Druckringe
- 10: Spannschrauben
- 11: Absatz
- 12: Ringflansch
- 13: Konusfläche
- 14: Konusfläche
- 15, 15': Zwischenraum
- 16: Schlitz
- 17: Beschichtung
- 18: Ringflansch
- 19: Schlitz
- 20: Ausnehmung
- 21: Gewindebohrung
- 22: Bohrung

## Patentansprüche

1. Spannvorrichtungs-Set zum Verbinden einer Hohlwelle (3) mit einer koaxial darin verlaufenden Vollwelle (4) aus einer zylindrischen Adapterbuchse (1), die in ein Ende (6) der Hohlwelle (3) eingesetzt werden kann, und einer Schrumpfscheibe (2), welche außen auf die Hohlwelle (3) aufgesetzt und die Hohlwelle (3) zusammen mit der Adapterbuchse (1) nach radial innen verpressen kann,
**dadurch gekennzeichnet, dass**
die Adapterbuchse (1) aus Stahl gefertigt ist und mindestens auf Ihrer Außenmantelfläche und Innenmantelfläche mit einer reiberhöhenden Beschichtung (17) versehen ist.

2. Spannvorrichtungs-Set nach Anspruch 1,
**dadurch gekennzeichnet, dass**
die Beschichtung (17) mindestens einen Hartstoff aufweist.

3. Spannvorrichtungs-Set nach Anspruch 2,
**dadurch gekennzeichnet, dass**
es sich bei dem Hartstoff um SiC handelt.

4. Spannvorrichtungs-Set nach Anspruch 3,
**dadurch gekennzeichnet, dass**
die Beschichtung (17) durch chemische Vernickelung mit eingelagertem SiC erhalten wurde.

5. Spannvorrichtungs-Set nach einem der vorhergehenden Ansprüche,
**dadurch gekennzeichnet, dass**
die Beschichtung (17) eine Schichtstärke von 0,005 bis 0,01 und insbesondere 0,007 bis 0,009 mm besitzt.

6. Spannvorrichtungs-Set nach einem der vorhergehenden Ansprüche,
**dadurch gekennzeichnet, dass**
die Adapterbuchse (1) einen sich axial erstreckenden, durchgehenden Längsschlitz (16) besitzt.

7. Spannvorrichtungs-Set nach einem der vorhergehenden Ansprüche,
**gekennzeichnet durch**
eine zylindrische Stützbuchse (5), die in das andere Ende (7) der Hohlwelle (3) einsetzbar ist.

8. Spannvorrichtungs-Set nach Anspruch 7,
**dadurch gekennzeichnet, dass**
die Stützbuchse (5) eine Klemmbuchse darstellt.

9. Spannvorrichtungs-Set nach einem der vorhergehenden Ansprüche,
**dadurch gekennzeichnet, dass**
die Schrumpfscheibe (2) einen radial innenliegenden Stauchring (8), dessen Außenmantelfläche zwei gegenläufige Konusflächen (13, 14) aufweist, und zwei radial außenliegende Druckringe (9, 9'), deren Innenmantelfläche jeweils eine Konusfläche aufweist, die mit der gegenüberliegenden Konusfläche (13, 14) des Stauchringes (8) zusammenwirkt, besitzt,
die Druckringe (9, 9') geschmiedete Druckringe (9, 9') darstellen und die Oberfläche der geschmiedeten Druckringe (9, 9') zumindest an ihrer Außenmantelfläche zumindest teilweise unbehandelt ist.
